**Europäisches Patentamt**

**European Patent Office**

**Office européen des brevets**

(19)

(11) Veröffentlichungsnummer: **0 196 137**
**B1**

(12) # EUROPÄISCHE PATENTSCHRIFT

(45) Veröffentlichungstag der Patentschrift:
**10.08.88**

(51) Int. Cl.⁴: **C 03 B 37/14**

(21) Anmeldenummer: **86200463.7**

(22) Anmeldetag: **20.03.86**

(54) **Verfahren zum Verschweissen zweier Gruppen von paarweise zueinander ausgerichteten Lichtwellenleitern.**

(30) Priorität: **23.03.85 DE 3510703**

(43) Veröffentlichungstag der Anmeldung:
**01.10.86 Patentblatt 86/40**

(45) Bekanntmachung des Hinweises auf die Patenterteilung:
**10.08.88 Patentblatt 88/32**

(84) Benannte Vertragsstaaten:
**DE FR GB IT**

(56) Entgegenhaltungen:
**EP-A-0 069 832**
**DE-A-3 105 156**
**DE-A-3 325 157**
**JP-A-57 135 909**

(73) Patentinhaber: **Philips Patentverwaltung GmbH, Wendenstrasse 35 Postfach 10 51 49, D-2000 Hamburg 1 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten: **FR GB IT**

(72) Erfinder: **Zell, Werner, Dr.rer.nat., Gleitwitzer Strasse 15, D-5000 Köln 80 (DE)**

(74) Vertreter: **Koch, Ingo, Dr.- Ing., Philips Patentverwaltung GmbH Wendenstrasse 35 Postfach 10 51 49, D-2000 Hamburg 1 (DE)**

**Beschreibung**

Die Erfindung bezieht sich auf ein Verfahren zum Verschweißen zweier Gruppen von paarweise zueinander ausgerichteten Lichtwellenleitern mittels einer über die korrespondierenden Enden der Gruppen dieser Lichtwellenleiter geführten, einen Energiestrahl erzeugenden Schweißeinrichtung, welche schrittweise von einer Schweißstellung zur nächsten fortbewegt wird.

Bei einem durch die DE-A1-31 05 156 bekannten derartigen Verfahren wird das Elektrodenpaar schrittweise von einem Lichtwellenleiterpaar zum nächsten geführt, so daß der Lichtbogen jeweils genau auf die Verbindungsstelle eines Paares von Lichtwellenleitern gerichtet ist. Wenn der Abstand der benachbarten Paare von Lichtwellenleitern sehr gering ist, besteht die Gefahr, daß benachbarte Paare ungewollt beeinträchtigt werden. Das bekannte Verfahren ist nicht geeignet zur Verschweißung von Paaren von Lichtwellenleitern, die unmittelbar nebeneinander liegen. Bei einem Außendurchmesser de direkt nebeneinander liegenden, mit einer Primärbeschichtung versehenen Fasern von 250 µm beträgt der lichte Abstand der von der Primärbeschichtung befreiten Faserenden nur etwa 125 µm. Bei diesem geringen Abstand wäre allenfalls eine kontinuierliche Schweißbogenbewegung denkbar, welche dann aber den Nachteil hat, daß keine gezielten Vorwärmzeiten und Schweißzeiten möglich sind.

Der Erfindung liegt die Aufgabe zugrunde, das Verfahren der eingangs genannten Art so zu gestalten, daß alle Faserpaare einer Gruppe auch bei geringem Abstand voneinander gleichmäßig einwandfrei und mit geringem Aufwand verschweißt werden können.

Die Lösung gelingt dadurch, daß der Energiestrahl jeweils in eine solche Position fortbewegt wird, daß er senkrecht den Zwischenraum zweier benachbarter Paare von Lichtwellenleitern mittig durchdringt und daß der Schrittweg etwa dem doppelten Abstand zweier benachbarter Paare von Lichtwellenleitern entspricht. Vorteilhafte Weiterbildungen der Erfindung sind in den Unteransprüchen gekennzeichnet.

Die Erfindung bezieht sich auch auf eine Vorrichtung zur Ausübung des erfindungsgemäßen Verfahrens mit

- einer Trägeranordnung zur Halterung der Enden einer ersten Gruppe von Lichtwellenleitern

- einer Trägeranordnung zur Haterung der korrespondierenden Enden einer zweiten Gruppe von Lichtwellenleitern in vorbestimmter Ausrichtung zur ersten Gruppe von Lichtwellenleitern

- einer über die korrespondierenden Enden der Gruppen von Lichtwellenleitern schrittweise verfahrbaren Schweißeinrichtung zur Erzeugung eines Energiestrahls, gekennzeichnet durch, einen einstellbaren Schrittgeber zur Fortbewegung der Schweißeinrichtung um jeweils etwa den doppelten Abstand zweier benachbarter Paare von Lichtwellenleitern in eine solche Stellung des Energiestrahls, daß er mittig durch den Zwischenraum zwischen zwei Paaren von Lichtwellenleitern dringt.

Da der verschweißende Energiestrahl zwischen zwei Paare von Lichtwellenleitern gerichtet ist, kann dessen Wärme die überbenachbarten Paare von Lichtwellenleitern praktisch nicht beeinflussen. Die direkt benachbarten Paare werden dagegen wegen der symmetrischen Wärmeverteilung gleichzeitig in gleicher Qualität miteinander verschweißt, wobei Vorwärmzeit und Schweißzeit sowie die Stromstärke zur Erzielung einer optimalen Schweißqualität frei einstellbar sind. Als weiterer Vorteil ergibt sich, daß die Anzahl der Schweißvorgänge halbiert ist, so daß der Zeitaufwand zur Verbindung der Lichtwellenleiter erheblich reduziert wird.

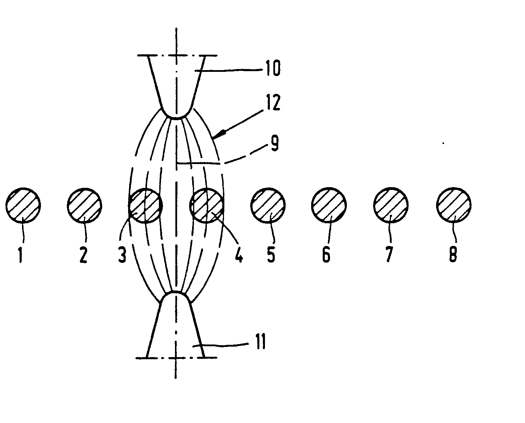

Die Erfindung wird anhand eines in der Zeichnung stilisiert dargestellten Schweißvorganges erläutert.

Die in einer Ebene äquidistant und vorzugsweise parallel zueinander angeordneten Enden der Lichtwellenleiter 1 bis 8 sollen mit paarweise zugeordneten Enden von Lichtwellenleitern verschweißt werden. Dazu wird die Mittellinie 9 des von den Elektroden 10 und 11 gebildeten Lichtbogens 12 mittig durch den Zwischenraum zwischen den Fasern 3 und 4 geführt. Durch die seitlichen Bereiche des Lichtbogens 9 werden die Fasern 3 und 4 gleichzeitig und mit gleichem Erwärmungsverlauf mit den zugehörigen Paarenden verschweißt. Anschließend werden die Elektroden 10 und 11 zu einer Schrittbewegung über den Zwischenraum zwischen den Fasern 5 und 6 und danach zwischen den Fasern 7 und 8 veranlaßt, wobei jeweils der Schweißvorgang wie oben beschrieben wiederholt wird. Es ist vorausgesetzt, daß die Fasern 1 und 2 bereits vorher mit den zugeordneten Paarenden verschweißt wurden. Die in der Figur dargestellten 8 Faserpaare werden also durch nur vier Schweißvorgänge verbunden.

In der Figur ist eine Lichtbogenschweißung dargestellt. Es ist jedoch ebenfalls möglich, den schweißenden Energiestrahl als Gasflamme auszubilden.

Das beschriebene Verfahren wird zweckmäßig mit einer speziell angepaßten Schweißvorrichtung ausgeübt. Diese enthält eine erste Trägeranordnung zur Halterung der ersten Enden einer Gruppe von Lichtwellenleitern, eine zweite Trägeranordnung zur Halterung der korrespondierenden zweiten Enden einer Gruppe von Lichtwellenleitern in vorbestimmter Ausrichtung zur ersten Gruppe von Lichtwellenleitern, eine über die Trägeranordnung schrittweise verfahrbare Schweißeinrichtung zur Erzeugung eines Energiestrahls und einen einstellbaren Schrittgeber zur Fortbewegung der Schweißeinrichtung um jeweils etwa den doppelten Abstand zweier benachbarter Paare von Lichtwellenleitern in eine solche Stellung, daß der Energiestrahl mittig durch den Zwischenraum zwischen zwei benachbarten Paare von Lichtwellenleitern dringt.

**Patentansprüche**

1. Verfahren zum Verschweißen zweier Gruppen von paarweise zueinander ausgerichteten Lichtwellenleitern (1 bis 8) mittels einer über die korrespondierenden Enden der Gruppen dieser Lichtwellenleiter geführten, einen Energiestrahl (12) erzeugenden Schweißeinrichtung, welche schrittweise von einer Schweißstellung zur nächsten fortbewegt wird, dadurch gekennzeichnet, daß der Energiestrahl (12) jeweils in eine solche Position fortbewegt wird, daß er senkrecht den Zwischenraum zweier benachbarter Paare (3, 4) von Lichtwellenleitern mittig durchdringt und daß der Schrittweg etwa den doppelten Abstand zweier Paare (3, 4) von Lichtwellenleitern entspricht.

2. Verfahren nach Anspruch 1, dadurch gekennzeichnet, daß die Paare von Lichtwellenleitern (1 bis 8) in einer Ebene äquidistant zueinander angeordnet werden.

3. Verfahren nach Anspruch 1 oder 2, dadurch gekennzeichnet, daß der Energiestrahl (12) ein zwischen zwei Elektroden (10, 11) gezündeter Lichtbogen ist.

4. Verfahren nach Anspruch 1 oder 2, dadurch gekennzeichnet, daß der Energiestrahl (12) durch eine Gasflamme gebildet ist.

5. Vorrichtung zur Ausübung des Verfahrens nach einem der Ansprüche 1 bis 4, mit
- einer Trägeranordnung zur Halterung der Enden einer ersten Gruppe von Lichtwellenleitern (1 bis 8)
- einer Trägeranordnung zur Halterung der korrespondierenden Enden einer zweiten Gruppe von Lichtwellenleitern in vorbestimmter Ausrichtung zur ersten Gruppe von Lichtwellenleitern
- einer über die korrespondierenden Enden der Gruppen von Lichtwellenleitern (1 bis 8) schrittweise verfahrbaren Schweißeinrichtung (10, 11) zur Erzeugung eines Energiestrahls (12), gekennzeichnet durch, einen einstellbaren Schrittgeber zur Fortbewegung der Schweißeinrichtung (10, 11) um jeweils etwa den doppelten Abstand zweier Paare (3, 4) von Lichtwellenleitern in eine solche Stellung, daß der Energiestrahl (12) mittig durch den Zwischenraum zwischen zwei Paaren von Lichtwellenleitern dringt.

**Claims**

1. A method of fusion splicing two groups of optical wave guides (1 to 8) which are aligned in pairs, using a heat fusion device which generates an energy beam (12) which is applied over the corresponding ends of the groups of these optical wave guides and is moved in steps from one fusion-splicing position to the subsequent position, characterized in that, the energy beam (12) is always moved to such a position that it perpendicularly passes through the centre region of the spacing between two adjacent pairs (3, 4) of optical wave guides and that the step length corresponds to approximately double the spacing between two pairs (3, 4) of optical wave guides.

2. A method as claimed in Claim 1, characterized in that, the pairs of optical wave guides (1 to 8) are arranged equidistantly from each other in one plane.

3. A method as claimed in Claim 1 or 2, characterized in that, the energy beam (12) is a light arc ignited between two electrodes (10, 11).

4. A method as claimed in Claim 1 or 2, characterized in that, the energy beam (12) is constituted by a gas flame.

5. An arrangement for performing the method as claimed in any one of the Claims 1 to 4, comprising
- a carrier arrangement for holding the ends of a first group of optical wave guides (1 to 8)
- a carrier arrangement for holding the corresponding ends of a second group of optical wave guides in a predetermined alignment with the first group of optical wave guides
- a fusion splicing device (10, 11) which is stepwise movable over the corresponding ends of the groups of optical wave guides (1 to 8), to generate an energy beam (12), characterized in that an adjustable stepper conveyor is provided for advancing the fusion splicing device (10, 11) through always approximately double the distance between two pairs (3, 4) of optical wave guides to such a position that the energy beam (12) passes in the central region through the spacing between two pairs of optical wave guides.

**Revendications**

1. Procédé pour le soudage de deux groupes de guides d'ondes lumineuses (1 à 8) alignés par paire les uns par rapport aux autres à l'aide d'un dispositif à souder guidé sur les extrémités correspondantes de ces groupes de guides d'onde lumineuses et produisant un rayon lumineux (12), ce dispositif à souder étant déplacé pas à pas d'une position de soudage à la suivante, caractérisé en ce que le rayon d'énergie (12) se déplace chaque fois dans une position telle qu'il traverse perpendiculairement l'intervalle de deux paires voisines (3, 4) de guides d'ondes lumineuses de façon centrale et que le trajet d'un pas correspond pratiquement à deux fois l'espacement de deux paires voisines de guides d'ondes lumineuses.

2. Procédé selon la revendication 1, caractérisé en ce que les paires de guides d'ondes lumineuses (1 à 8) sont disposées de façon équidistante dans un plan.

3. Procédé selon la revendication 1 ou 2, caractérisé en ce que le rayon d'énergie (12) est constitué par un arc lumineux réalisé entre deux électrodes (10 et 11).

4. Procédé selon la revendication 1 ou 2, caractérisé en ce que le rayon lumineux (12) est constitué par une flamme de gaz.

5. Dispositif pour la mise en oeuvre du procédé selon l'une des revendications 1 à 4, comprenant
- un dispositif support pour la fixation des extrémités d'un premier groupe de guides d'ondes lumineuses (1 à 8)
- un dispositif support pour la fixation des extrémités correspondantes d'un deuxième groupe de guides d'onde lumineuses dans un alignement préalablement déterminé par rapport au premier groupe de guides d'ondes lumineuses.
- un dispositif à souder (10, 11) pouvant être déplacé pas à pas au-dessus des extrémités correspondantes des groupes de guides d'ondes lumineuses (1 à 8) pour la réalisation d'un rayon d'énergie (12), caractérisé par un générateur de pas réglable pour le déplacement du dispositif à souder (10, 11) sur chaque fois une distance égale à deux fois l'espacement de deux paires (3, 4) de guides d'ondes lumineuses dans une position telle que le rayon d'énergie traverse d'une façon centrale l'espace compris entre deux paires de guides d'ondes lumineuses.